# DEMANDE DE BREVET EUROPEEN

(11) **EP 4 765 751 A1**
(43) Date de publication de la demande: **24.06.2026**
(21) Numéro de dépôt: 25222466.2
(22) Date de dépôt: 11.12.2025
(51) Int. Cl.: H04L 41/0213, H04L 41/34, H04L 41/0663, H04L 43/0811, H04L 43/0852

(54) **PROCEDE DE GESTION D'UN DISPOSITIF DISTANT, PROCEDE DE COMMUNICATION, SERVEUR DE GESTION ET DISPOSITIF DE COMMUNICATION**

(30) Priorité: 17.12.2024 FR 2414402
(71) Demandeur: Orange, 92130 Issy-les-Moulineaux (FR)
(72) Inventeur: L HÉRÉEC, Kévin, 92326 Chatillon (FR); BOUR, Frédéric, 92326 Chatillon (FR); BAUD, Valentin, 92326 Chatillon (FR)

(57) **Abrégé**

Le procédé de gestion d'un dispositif distant (DD) mis en œuvre par un serveur de gestion (SG) configuré pour gérer ledit dispositif distant via un canal de gestion courante (C1) établi avec le dispositif distant, ledit procédé comprend :
- une étape d'envoi, au dispositif distant, via ledit canal de gestion, d'une commande d'établissement d'un canal d'intervention occasionnelle (C2) présentant une latence inférieure à celle du canal de gestion,
- suite à l'établissement dudit canal d'intervention occasionnelle, l'envoi d'au moins une commande de gestion au dispositif distant via ledit canal d'intervention occasionnelle.

## Description

### Domaine de l'invention

Cette invention se rapporte de manière générale au domaine des communications entre dispositifs distants.

Plus précisément, l'invention porte sur un procédé de gestion à distance d'un dispositif communicant.

### Art antérieur

L'accès Internet s'appuie sur la mise en œuvre de nombreux équipements réseau : serveurs, DSLAM (Digital subscriber line access multiplexer), routeurs, passerelles, etc. Le bon fonctionnement de ces équipements implique différentes actions de gestion, de maintenance et parfois de dépannage. De telles actions peuvent par exemple correspondre à des mises à jour des systèmes informatiques (firmware) de ces équipements, au réglage de leurs paramètres de configuration ou encore ponctuellement à la recherche d'erreurs, à des tests en vue de résoudre des dysfonctionnements ou des pannes.

De fait de la nature variée des équipements réseau à gérer, de leur nombre et de leur localisation (et incidemment, d'une éventuelle difficulté d'accès à ces équipements réseau), il est nécessaire de recourir à des protocoles de communication adaptés permettant d'interagir à distance avec ces équipements réseau.

Ainsi, par exemple, le protocole TR-069 (ou CPE WAN Management Protocol, tel que défini dans le rapport technique « TR-069: CPE WAN Management Protocol » du DSL Forum de mai 2004) est fréquemment utilisé dans le contexte de la gestion, depuis un réseau étendu, des équipements appartenant à un réseau local, comme par exemple des routeurs ou des passerelles, souvent désignées sous le terme de « box internet ».

Ce protocole est particulièrement bien adapté dans ce contexte, puisqu'il permet d'exécuter des opérations de maintenance et de mise à jour d'un grand nombre d'équipements de façon sécurisée tout en limitant les coûts réseau associés.

Cependant, le protocole TR-069 et les protocoles similaires ne sont pas conçus pour des communications en temps réel. Dans le cas d'interventions ponctuelles comme par exemple lors de dépannages ou de recherches des causes d'un dysfonctionnement d'un équipement réseau, cette limitation peut entraîner un allongement de la durée d'intervention des techniciens opérant depuis un serveur de gestion.

Afin de remédier à ce problème, d'autres protocoles dits « temps réel », comme par exemple le protocole MQTT (initialement Message Queuing Telemetry Transport), peuvent être utilisés. Toutefois ces protocoles, qui présentent une latence moins importante, nécessitent une connexion permanente entre le serveur de gestion et l'équipement réseau sur lequel une intervention est prévue afin de maintenir un canal de communication actif entre eux. Bien que cela permette une interaction quasi instantanée, le maintien d'une telle connexion permanente peut s'avérer coûteux en termes de ressources réseau, de consommation d'énergie et d'infrastructure à gérer, qui plus est lorsqu'une intervention est requise sur un grand nombre d'équipements réseau.

Cette exigence de connectivité constante pose un défi particulier pour les opérateurs réseau qui cherchent à optimiser l'efficacité opérationnelle tout en gérant des parcs d'équipements en expansion.

Il en résulte que de tels protocoles dits « temps réel », du fait de leur coût et du nombre d'équipements à gérer ne sont pas utilisés pour réaliser les opérations de configuration à distance ou de diagnostic.

### Objet et résumé de l'invention

L'invention répond notamment au problème de l'arbitrage entre un réseau économe en termes de coût réseau et un réseau présentant une latence moins importante, en proposant un procédé de gestion d'un dispositif distant, mis en œuvre par un serveur de gestion configuré pour gérer ledit dispositif distant via un canal de gestion courante établi avec le dispositif distant, ledit procédé comprenant :
- une étape d'envoi, au dispositif distant, via ledit canal de gestion, d'une commande d'établissement d'un canal d'intervention occasionnelle présentant une latence inférieure à celle du canal de gestion,
- suite à l'établissement dudit canal d'intervention occasionnelle, l'envoi d'au moins une commande de gestion au dispositif distant via ledit canal d'intervention occasionnelle.

L'invention concerne également un procédé de communication, mis en œuvre par un dispositif distant communiquant avec un serveur de gestion via un canal de gestion courante, ledit procédé comprenant :
- une étape de réception, en provenance dudit serveur de gestion via ledit canal de gestion courante, d'une commande d'établissement d'un canal d'intervention occasionnelle présentant une latence inférieure à celle du canal de gestion,
- suite à l'établissement du canal d'intervention, une étape de réception d'au moins une commande de gestion en provenance du serveur de gestion via le canal d'intervention.

L'invention permet avantageusement de pallier les limitations des solutions de gestion de l'état de la technique basées uniquement sur l'utilisation d'un protocole de communication de type TR-069 ou similaire, et notamment leur latence relativement conséquente, en offrant la possibilité au serveur de gestion d'utiliser, lorsque cela est nécessaire ou pertinent, un canal de communication présentant une latence moindre et incidemment une plus grande réactivité.

En réduisant les temps de transmission de façon conséquente dès lors que deux dispositifs doivent s'envoyer un grand nombre de requêtes et de réponses (request-reply) et qu'un temps de latence s'applique pour chaque échange, l'invention permet avantageusement à un technicien devant intervenir sur un ou plusieurs équipements réseau, de réaliser des interventions plus courtes. Il lui est en conséquence possible de réaliser plus d'interventions dans un laps de temps donné.

Ainsi, l'invention propose de disposer de deux canaux pour la gestion d'un équipement distant :
- un canal de gestion courante (par la suite indifféremment appelé premier canal), utilisé par défaut pour de nombreuses opérations usuelles, comme par exemple la remontée d'informations d'usage ou la mise à jour de passerelles internet ou de routeurs via des serveurs de gestion. Ce canal de gestion courante peut recourir typiquement à des protocoles de gestion de dispositifs distants tels que TR-069 ou un protocole similaire ; et
- un canal d'intervention occasionnelle (par la suite indifféremment appelé second canal), qui présente une plus grande réactivité que le canal de gestion courante au prix d'un coût plus conséquent en termes de ressources réseau, mais dont l'activation est ponctuelle et exceptionnelle.

Le fait que le canal d'intervention occasionnelle puisse nécessiter des ressources réseau plus conséquentes (par exemple parce que ce canal impose qu'une connexion permanente au serveur soit maintenue active) est ainsi contrebalancé par le fait que son activation est, conformément à l'invention, déclenchée de façon occasionnelle, par exemple lors d'une opération de dépannage ou de diagnostic ponctuelle.

Selon un mode de réalisation particulier, le procédé de gestion d'un dispositif distant comprend en outre une étape de détection d'un événement donné déclenchant l'envoi, au dispositif distant, via ledit canal de gestion, de la commande d'établissement du canal d'intervention occasionnelle.

Aucune limitation n'est attaché à la nature de l'événement déclenchant l'envoi de la commande d'établissement. Par exemple, cet événement peut être l'ouverture depuis le serveur de gestion, d'un panneau de configuration associé à l'équipement réseau distant ou encore lorsqu'un technicien de support entre dans un logiciel, mis en œuvre par le serveur de gestion, un numéro de référence d'un client associé à un dispositif distant.

Ce mode de réalisation permet avantageusement de conditionner l'activation d'un canal d'intervention occasionnelle à un évènement déclencheur particulier et préétabli, et donc de réduire le risque d'un accroissement des ressources réseau mobilisées pour des actions non exceptionnelles associées par défaut au canal de gestion utilisée pour les opérations de gestion courante

Selon un mode de réalisation particulier du procédé de communication, l'établissement du canal d'intervention occasionnelle est conditionné par une authentification de la commande d'établissement reçue en provenance du serveur de gestion.

L'authentification mise en œuvre pour ce mode de réalisation peut être une authentification selon le protocole SSL/TLS (Secure Socket Layer/Transport Layer Security) ou selon tout autre protocole connu de l'homme du métier.

Ce mode de réalisation permet avantageusement de sécuriser les actions exécutées via le canal d'intervention occasionnelle. Par exemple, l'authentification permet de faire en sorte que le dispositif distant ne reçoive pas d'informations pouvant contrevenir à son bon fonctionnement ou, au contraire, n'envoie pas d'informations sensibles à un serveur de gestion non autorisé.

D'autre part, la mise en œuvre d'une authentification préalable à la commande d'établissement du canal d'intervention occasionnelle permet d'éviter une consommation de ressources réseau inutile en cas de commande d'établissement d'un canal d'intervention par un serveur de gestion non autorisé.

Selon un mode de réalisation particulier, le procédé de communication comprend en outre une étape de désactivation du canal d'intervention occasionnelle après une période de temps connue du dispositif distant.

En variante, le procédé de communication comprenant en outre une étape de désactivation du canal d'intervention occasionnelle à l'issue d'une période d'inutilisation donnée dudit canal d'intervention occasionnelle.

La valeur de ce temps d'inutilisation peut notamment être communiqué lors de la demande d'activation du canal d'intervention occasionnelle. Optionnellement, la demande d'activation du second canal peut être refusée si aucune valeur n'est renseignée vis-à-vis de ce temps d'inutilisation ou si la valeur renseignée est supérieure à un temps maximal autorisé par le dispositif distant.

Ces modes de réalisation permettent avantageusement de limiter la consommation énergétique et la consommation en bande passante associée au canal d'intervention occasionnelle. Le fait de rendre cette interruption automatique en cas d'inactivité ou de la conditionner à un temps donné préétabli permet de limiter les risques d'une activation trop longue du canal d'intervention occasionnelle et donc trop consommatrice en termes de ressources réseau. Ce mode de réalisation permet également de s'affranchir d'une commande spécifique d'interruption du canal d'intervention occasionnelle, ce qui simplifie la mise en œuvre de l'invention.

Selon un mode de réalisation particulier le procédé de gestion comprend en outre une étape d'envoi d'une commande de désactivation du canal d'intervention occasionnelle au dispositif distant.

En correspondance, selon un mode de réalisation particulier, le procédé de communication comprend en outre une étape de désactivation du canal d'intervention occasionnelle sur réception d'une commande du serveur.

Ce mode de réalisation permet avantageusement d'éviter les cas où le canal d'intervention occasionnelle est ouvert trop longtemps et où les coûts réseaux engendrés par le maintien de son ouverture ne sont plus compensés par les avantages apportés par sa réactivité et le temps de latence moindre entre les messages échangés avec le serveur de gestion.

Selon un mode de réalisation particulier, le canal d'intervention occasionnelle est conforme au protocole MQTT.

Le recours au protocole MQTT permet une interaction quasi instantanée entre le serveur de gestion et le dispositif distant et offre donc des temps de latence moindres que le canal de communication par défaut utilisé pour communiquer entre le serveur de gestion et le dispositif distant.

Le maintien de connexions selon le protocole MQTT entre un grand nombre de dispositifs de communication pouvant s'avérer coûteux en termes de ressources réseau, l'invention permet de circonscrire le recours à un tel protocole à des utilisations occasionnelles.

Selon un mode de réalisation particulier le canal de gestion courante est conforme au protocole TR-069 (Technical Report).

L'invention concerne également un serveur de gestion configuré pour gérer un dispositif distant via un canal de gestion courante établi avec le dispositif distant, comprenant :
- un module d'envoi configuré pour envoyer au dispositif distant, via ledit canal de gestion, une commande d'établissement, d'un canal d'intervention occasionnelle présentant une latence inférieure à celle du canal de gestion,
- un module de gestion configuré pour, suite à l'établissement dudit canal d'intervention occasionnelle, envoyer au moins une commande de gestion au dispositif distant via ledit canal d'intervention occasionnelle.

L'invention concerne également apte à communiquer avec un serveur de gestion via un canal de gestion courante, ledit dispositif distant comprenant :
- un module de réception, configuré pour recevoir, en provenance dudit serveur de gestion via ledit canal de gestion courante, une commande d'établissement d'un canal d'intervention occasionnelle présentant une latence inférieure à celle du canal de gestion,
- un module de réception, configuré pour, suite à l'établissement du canal d'intervention occasionnelle, recevoir au moins une commande de gestion en provenance du serveur de gestion via le canal d'intervention.

L'invention concerne enfin un système de communication comprenant :
- un serveur de gestion conforme à l'invention,
- un dispositif distant conforme à l'invention.

L'invention concerne encore un programme d'ordinateur comportant des instructions de code de programme pour la mise en œuvre des procédés de de gestion et de communication selon l'un quelconque des modes particuliers de réalisation décrits précédemment, lorsque ledit programme est exécuté sur un ordinateur.

De telles instructions peuvent être stockées durablement dans un support mémoire non transitoire d'un terminal de communication mettant en œuvre les procédés de gestion et de communication selon l'invention.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'informations ou d'enregistrement lisible par un ordinateur et comportant des instructions d'un programme d'ordinateur tel que mentionné ci-dessus.

Le support d'enregistrement peut être n'importe quelle entité ou dispositif capable de stocker le programme. Par exemple, le support peut comporter un moyen de stockage, tel qu'une ROM (« *Read Only Memory* » en anglais), par exemple un CD ROM (« *Compact Disc Read-Only Memory* » en anglais) ou une ROM de circuit microélectronique, ou encore un moyen d'enregistrement magnétique, par exemple un support mobile, un disque dur ou un SSD (« *Solid State-Drive* » en anglais).

D'autre part, le support d'enregistrement peut être un support transmissible, tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par un exemple un réseau de type Internet.

Alternativement, le support d'enregistrement peut être un circuit intégré dans lequel le programme est incorporé, le circuit étant adapté pour exécuter ou pour être utilisé dans l'exécution des procédés de gestion et de communication précités.

On peut également envisager, dans d'autres modes de réalisation, que les procédés, les dispositifs de gestion et de communication, et le système de communication selon l'invention présentent en combinaison tout ou partie des caractéristiques précitées.

### Brève description des dessins et annexe

D'autres caractéristiques et avantages apparaîtront à la lecture de modes de réalisation particuliers de l'invention, donnés à titre d'exemples illustratifs et non limitatifs, et des dessins annexés, parmi lesquels :
La [Fig.1] représente un système de communication selon l'invention dans un mode particulier de réalisation,
La [Fig.2] représente un exemple d'un serveur de gestion mettant en œuvre le procédé de gestion d'un dispositif distant selon un mode de réalisation de l'invention,
La [Fig.3] représente un exemple d'un dispositif distant mettant en œuvre le procédé de communication selon un mode de réalisation de l'invention,
La [Fig.4] décrit les étapes des procédés de gestion et de communication selon un mode de réalisation,

L'annexe présente des commandes en langage Python^{®} pouvant être utilisées par le dispositif distant.

### Description d'un exemple d'architecture dans laquelle le s procédé s de communication sont mis en œuvre

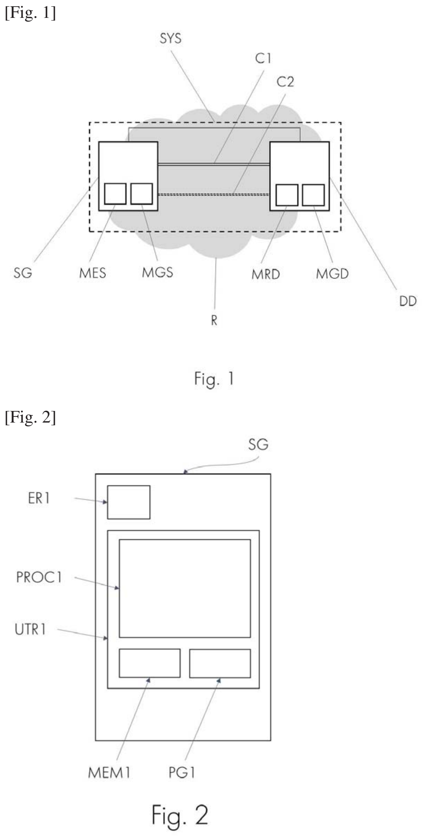

La figure [Fig.1] présente un système de communication au sein de laquelle peut être mis en œuvre les procédés de gestion et de communication selon l'invention dans un mode particulier de réalisation.

Ce système comprend :
- un serveur de gestion SG conforme à l'invention. Le serveur SG peut être un serveur dédié ou tout autre dispositif effectuant des opérations de gestion similaires (un ordinateur, un DSLAM, un ordinateur associé à une application de maintenance d'équipements distants, etc.) ; et
- au moins un dispositif distant DD, conforme à l'invention, tel que par exemple une passerelle, un NAS (Network Attached Storage, stockage en réseau en français), un routeur ou tout autre dispositif distant susceptible d'être géré par le serveur SG.

Le serveur SG et ledit au moins un dispositif distant DD communiquent grâce à un réseau de communication R. Ce réseau leur permet d'échanger des informations entre eux, notamment dans le cadre de l'invention. Dans ce mode de réalisation, le réseau R est un réseau fibre toutefois, alternativement, il peut s'agir de tout réseau de communication connu de l'homme du métier.

Dans l'exemple illustré à la [Fig.1], par souci de simplification, on envisage un unique dispositif distant DD. Toutefois, le serveur de gestion SG peut être configuré pour gérer une pluralité de dispositifs distants de façon similaire ou identique à ce qui est décrit ici pour le dispositif distant DD.

Dans l'exemple envisagé ici, le serveur de gestion SG correspond à un système de gestion de dispositifs, communément désigné par l'acronyme ACS (Auto-Configuration Servers, serveur de configuration automatique en français). Ce type de serveur est notamment utilisé pour la gestion à distance, la configuration et la surveillance de dispositifs tels que des routeurs, des passerelles résidentielles et des dispositifs IoT (Internet Of the Things, Internet des objets en français). Toutefois, le serveur de gestion peut correspondre à tout autre type de système ou de serveur connu de l'homme du métier. De façon connue en soi, le serveur de gestion SG communique avec le dispositif distant DD, pour la réalisation de telles opérations de gestion à distance, de configuration et/ou de surveillance, via un premier canal de communication C1, dit canal de communication par défaut ou canal de gestion courante, ce canal utilisant un protocole de communication donné.

Dans l'exemple envisagé ici, le canal de gestion courante est conforme au protocole de gestion TR-069. Toutefois, en variante, il peut également s'agir d'un canal de communication conforme à tout autre protocole de gestion CoaP ou à tout autre protocole, connu de l'homme du métier.

Conformément à l'invention, le dispositif distant DD et le serveur de gestion SG peuvent également communiquer ponctuellement via un second canal de communication C2, dit canal de communication occasionnelle ou canal d'intervention occasionnelle, utilisant un protocole donné différent du protocole de gestion utilisé par le canal de communication par défaut C1 et présentant une latence moindre.

Dans l'exemple envisagé ici, le canal d'intervention occasionnelle C2 est conforme au protocole MQTT.

Toutefois, en variante, il peut également s'agir d'un canal de communication conforme au protocole AMQP ou utilisant des bus de message KAFKA ou encore à tout autre protocole, connu de l'homme du métier, dès lors qu'il présente une latence inférieure à celle du canal de gestion courante.

Conformément à l'invention, le serveur de gestion SG est équipé :
- d'un module d'envoi MES, et
- d'un module de gestion MGS.

Le dispositif distant DD est lui équipé :
- d'un module de réception MRD,
- d'un module de réception MGD.

Les différents modules fonctionnels du serveur de gestion SG et du dispositif distant DD sont décrits plus en détail ultérieurement.

La [Fig.2] présente la structure simplifiée du serveur de gestion SG, configuré pour mettre en œuvre le procédé de gestion selon l'invention, dans un mode particulier de réalisation.

Dans le mode particulier de réalisation de l'invention décrit ici, les étapes exécutées par le serveur de gestion SG, sont implémentées au moyen d'instructions d'un programme d'ordinateur PG1. Pour cela, dans le mode de réalisation décrit ici, le serveur de gestion SG a l'architecture classique d'un ordinateur et comprend notamment un module d'émission/réception ER1, une mémoire MEM1, une unité de traitement UTR1, équipée par exemple d'un processeur PROC1, et pilotée par le programme d'ordinateur PG1 stocké en mémoire MEM1. La mémoire MEM1 est un support d'enregistrement au sens de l'invention.

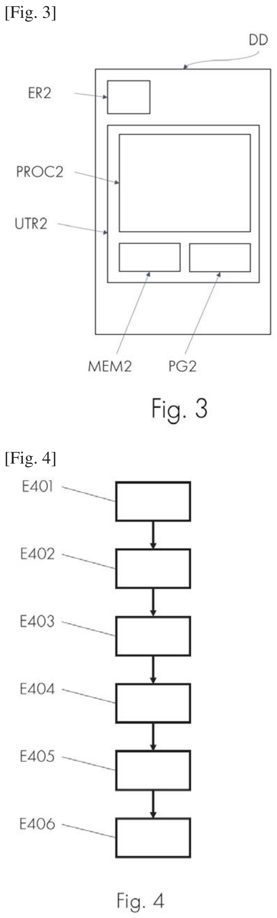

Comme évoqué ci-avant, le programme d'ordinateur PG1 comprend des instructions pour mettre en œuvre les étapes du procédé de gestion selon l'invention, qui sont décrites ultérieurement en référence à la figure [Fig.4].Il définit ainsi des modules fonctionnels du serveur SG qui comprennent :
- le module d'envoi MES configuré pour envoyer au dispositif distant, via le canal de gestion C1, une commande d'établissement du canal d'intervention occasionnelle C2 qui présente une latence inférieure à celle du canal de gestion C1,
- le module de gestion MGS configuré pour, suite à l'établissement dudit canal d'intervention occasionnelle C2, envoyer d'au moins une commande de gestion au dispositif distant via ledit canal d'intervention occasionnelle C2.

La [Fig.3] présente la structure simplifiée du dispositif distant DD configuré pour mettre en œuvre le procédé de communication selon l'invention dans un mode particulier de réalisation.

Dans le mode particulier de réalisation de l'invention décrit ici, les étapes exécutées par le dispositif distant DD sont implémentées au moyen d'instructions d'un programme d'ordinateur PG2. Pour cela, le dispositif DD a l'architecture classique d'un ordinateur et comprend notamment un module d'émission/réception ER2, une mémoire MEM2, une unité de traitement UT2, équipée par exemple d'un processeur PROC2, et pilotée par le programme d'ordinateur PG2 stocké en mémoire MEM2. La mémoire MEM2 est un support d'enregistrement au sens de l'invention.

Comme évoqué ci-avant, le programme d'ordinateur PG2 comprend des instructions pour mettre en œuvre les étapes du procédé de communication selon l'invention, qui sont décrites ultérieurement en référence à la figure [Fig.4]. Il définit des modules fonctionnels du dispositif distant DD qui comprennent en particulier:
- le module de réception MRD, configuré pour recevoir, en provenance dudit serveur de gestion via ledit canal de gestion courante C1, une commande d'établissement du canal d'intervention occasionnelle C2,
- le module de réception MGD, configuré pour, suite à l'établissement du canal d'intervention occasionnelle C2, recevoir au moins une commande de gestion en provenance du serveur de gestion via ce canal d'intervention occasionnelle C2.

### Description des principales étapes des procédés de gestion et de communication .

La figure [Fig.4] décrit les étapes des procédés de gestion et de communication selon l'invention dans un mode particulier de réalisation dans lequel les procédés sont mis en œuvre respectivement par le serveur de gestion SG et le dispositif distant DD.

Comme décrit précédemment, on suppose qu'au cours d'une étape préalable (non représentée sur la [Fig.4]), le canal de gestion courante C1 est établi entre le serveur de gestion SG et le dispositif distant DD. Ce canal de communication C1 est utilisé pour permettre des échanges entre le serveur de gestion SG et le dispositif distant DD (incluant notamment l'envoi de commandes de gestion par le serveur de gestion SG) dans le cadre d'opérations de gestion à distance communes, comme par exemple des mises à jour du dispositif distant DD ou la récupération par le serveur de gestion SG de données d'usage auprès du dispositif DD.

Toutefois, dans le cadre d'une opération de gestion occasionnelle, l'utilisation d'un canal d'intervention occasionnelle présentant une plus faible latence est jugée préférable à l'utilisation dudit canal de gestion courante.

Dans l'exemple envisagé ici, les procédés de gestion et de communication permettant l'établissement d'un canal d'intervention occasionnelle, sont initiés à la suite d'un événement donné, comme par exemple l'ouverture, en vue d'un dépannage urgent, d'une application métier depuis le serveur de gestion faisant référence à un identifiant correspondant au dispositif distant (comme par exemple un numéro client attaché au dispositif distant ou une adresse IP, etc.).

Toutefois, alternativement, les procédés de gestion et de communication, permettant l'établissement d'un canal d'intervention occasionnelle, sont mis en œuvre dès lors qu'une opération de gestion et/ou d'intervention justifie, du point de vue par exemple d'un technicien d'intervention ou d'un responsable support, le recours à un canal d'intervention occasionnelle.

Ainsi, en E401, le serveur de gestion SG envoie, au dispositif distant DD, via le canal de gestion courante C1, une commande d'établissement d'un canal d'intervention occasionnelle C2.

Le recours à ce canal d'intervention occasionnelle C2 est exceptionnel et n'est destiné que pour un nombre donné d'opérations de gestion pour lesquelles, du fait de sa moindre latence et malgré son surcoût en termes de ressources réseau, l'utilisation du canal d'intervention est justifiée aux vues de contraintes données. Il peut par exemple s'agir de l'importance d'une panne à adresser, du temps de traitement alloué à un technicien pour un type d'intervention, etc.

Selon cet exemple, l'envoi de la commande d'établissement est automatiquement déclenché à la suite d'un événement donné comme par exemple l'ouverture d'une application métier depuis le serveur de gestion faisant référence à un identifiant correspondant au dispositif distant (comme par exemple un numéro client attaché au dispositif distant ou une adresse IP, etc.) ou à tout autre évènement.

Dans le mode de réalisation décrit ici, la commande d'établissement du canal C2 abouti au déclenchement, par le dispositif distant DD, d'un serveur REST embarqué dans le dispositif distant servant de point d'activation pour un client MQTT.

La commande d'établissement d'un canal d'intervention occasionnelle C2 par le dispositif distant DD inclut également, dans le mode de réalisation décrit ici, une donnée permettant au dispositif distant d'authentifier le serveur de gestion SG.

À titre d'exemple (issu de l'annexe), une requête permettant l'activation (i.e. commande d'établissement au sens de l'invention) de manière sécurisée du canal C2 selon le protocole temps réel MQTT peut prendre la forme suivante :

| |
|---|
| curl-X POST "$DD_URL" \ |
| -H "Authorization: Bearer $AUTH_TOKEN" \ |
| -H "Content-Type: application/json" \ |
| -d '{ |
| "action": "establish_channel", |
| "protocol": "MQTT" |
| }' |

Dans cet exemple, on considère une authentification basique (« Basic Authentication »). Le paramètre AUTH_TOKEN est une donnée d'authentification connue du dispositif distant et du serveur.

En variante, une authentification selon les protocoles OAUTH2.0 ou une authentification basée sur des certificats X.509 ou tout autre type d'authentification connue de l'homme du métier peut être mise en œuvre.

En E402, le dispositif distant DD reçoit en provenance du serveur de gestion SG via le canal de communication par défaut C1, la commande d'établissement d'un canal d'intervention occasionnelle C2.

Selon ce mode de réalisation, le dispositif distant authentifie le serveur de gestion SG dont provient la commande (ou requête) d'établissement. Si le serveur de gestion SG est répertorié comme un serveur autorisé à émettre une commande de ce type auprès du dispositif distant DD, les procédés de gestion et de communication se poursuivent, sinon les procédés prennent fin.

L'information selon laquelle le serveur de gestion est autorisé à émettre une commande d'établissement d'un canal d'intervention occasionnelle est par exemple préalablement renseignée dans un fichier de configuration ou dans une base de données interne au dispositif distant DD ou accessible par ce dernier auprès d'un dispositif tiers non représenté (par exemple un serveur ou un ordinateur distant).

En E403, le dispositif distant DD établit un canal d'intervention occasionnelle (ou second canal de communication) C2 avec le serveur de gestion SG.

Selon ce mode de réalisation, un serveur REST embarqué dans le dispositif distant est utilisé pour activer un client MQTT afin d'établir ledit canal d'intervention occasionnelle.

Alternativement le canal d'intervention occasionnelle peut utiliser tout autre client correspondant à un autre protocole de communication adapté une intervention occasionnelle connu de l'homme du métier.

En E404, le dispositif distant DD envoie, à destination du serveur de gestion SG une demande de connexion au canal d'intervention occasionnelle C2.

À titre d'exemple issu de l'annexe, un prompt d'établissement d'une connexion MQTT via login/mot de passe sur un client MQTT peut prendre la forme suivante en langage Python^{®}:

| |
|---|
| # Informations d'authentification |
| username = "votre_nom_utilisateur" |
| password = "votre_mot_de_passe" |
| # Connexion au broker avec authentification |
| client.username_pw_set(username, password) |
| client.connect($SG_BROKER_URL, 1883, 60) |
| ‴‴ $SG_BROKER_URL étant un exemple d'adresse de connexion au serveur de g estion ‴‴ |
| # Boucle pour traiter les messages |
| client.loop_start() |

En E405, après avoir accepté la demande de connexion au client MQTT, le serveur de gestion SG envoie au moins une commande de gestion au dispositif distant DD via le canal d'intervention occasionnelle C2.

Dans l'exemple envisagé ici, le canal C2 est utilisé pour échanger des données relatives à l'intervention de dépannage évoquée précédemment. Alternativement, le canal d'intervention occasionnelle C2 est utilisé pour un diagnostic, un dépannage ou un paramétrage spécifique (c'est-à-dire non courant) du dispositif distant ou tout autre intervention pertinente pour l'homme du métier.

Selon ce mode de réalisation, le canal de communication C1 peut continuer à être utilisé, en parallèle du canal d'intervention occasionnelle C2, pour faire transiter des données relatives à des opérations de gestion courantes.

Afin de renforcer la sécurité, le serveur REST utilisé pour déclencher le client MQTT implémente par ailleurs des mécanismes d'authentification et d'autorisation stricts, assurant que seuls les messages provenant du serveur de gestion soient acceptés, empêchant ainsi toute activation non autorisée du client MQTT.

Ce mécanisme d'authentification est basé sur les mêmes informations que celles utilisées en E402 pour vérifier que le serveur de gestion est autorisé à émettre une commande d'établissement d'un canal d'intervention occasionnelle. Alternativement le serveur REST implémente un mécanisme d'authentification distinct comme par exemple par défaut le mode « https (Hypertext Transfer Protocol Secure) over TLS (Transport Layer Security) 2 ways » avec une identification mutuelle du certificat client et du certificat serveur en incluant un proxy entre le serveur et le client lequel ferait l'authentification basique d'accès.

Selon un autre exemple il est également possible de définir en complément un chemin d'adressage (« url path » en anglais) avec une extrémité d'un canal de communication. (« endpoint » en anglais) incluant un identifiant chiffré connu uniquement du serveur.

En E406, une fois les données échangées, le canal d'intervention occasionnelle C2 est désactivé.

Dans le mode de réalisation décrit ici, le canal d'intervention occasionnelle C2 est configuré pour être désactivé après un temps prédéfini connu du dispositif distant DD. Ce temps prédéfini est renseigné au préalable auprès du dispositif distant, par exemple lors de l'implémentation du système d'exploitation du dispositif distant ou à l'issue d'une étape de configuration antérieure préalable du dispositif.

Selon un autre mode de réalisation, le canal d'intervention occasionnelle C2 est configuré pour être désactivé après un temps d'inutilisation, c'est-à-dire à partir d'un temps donné au cours duquel aucun message n'a transité sur le canal d'intervention occasionnelle. De la même façon, la valeur de ce temps d'inutilisation du second canal est renseignée lors de l'initialisation du dispositif distant ou renseignée en amont de la mise en œuvre des procédés.

Selon un autre mode de réalisation, le canal d'intervention occasionnelle est configuré pour être désactivé après un temps donné par le serveur de gestion. Il peut par exemple s'agir d'un temps de connexion passé en paramètre lors de la demande d'établissement du canal d'intervention occasionnelle C2 ou lors d'une commande spécifique ou encore via une commande de fermeture du canal d'intervention occasionnelle envoyée par le serveur de gestion SG à l'issue d'un temps donné, ce temps pouvant être renseigné préalablement au niveau du serveur ou de l'application utilisée depuis le serveur de gestion, à l'origine du déclenchement de la demande d'établissement du canal d'intervention occasionnelle.

Selon un autre mode de réalisation encore, le canal d'invention occasionnelle est désactivé par le dispositif distant après réception d'une commande de désactivation émise par le serveur.

À titre d'exemple issu de l'annexe, un prompt de désactivation par le dispositif distant du canal MQTT peut prendre la forme suivante en langage Python^{®}:

| |
|---|
| client.loop_stop() |
| client.disconnect() |

En conclusion, l'invention permet avantageusement, selon le mode de réalisation décrit ici, à un technicien d'intervention ou à tout autre homme du métier, d'intervenir sur un dispositif distant via le canal de communication le plus adapté à l'urgence de la situation.

Selon ce mode de réalisation, le technicien, ou tout autre homme du métier, peut utiliser les procédés de gestion et de communication de façon itérative à chaque fois qu'une intervention ou une action de gestion particulière requiert, selon lui, un canal de communication présentant une latence moins importante que celle du canal de gestion courante.

Les procédés ici décrits dans le cadre d'équipements réseau peuvent également être appliqués de façon générale à tout objet connecté que l'on cherche à gérer à distance.

### Annexe

Exemple de commandes, en langage Python^{®}, pouvant être mises en œuvre par le client MQTT au niveau du dispositif distant ou au niveau du serveur de gestion :

| |
|---|
| import paho.mqtt.client as mqtt |
| # Callback pour la connexion |
| def on_connect(client, userdata, flags, rc): |
| print("Connecté avec le code de résultat: " + str(rc)) |
| # Souscrire à un topic après la connexion |
| client. subscribe(" exemple/topic ") |
| # Callback pour la réception de messages |
| def on_message(client, userdata, msg): |
| print(f"Message reçu sur {msg.topic}: {msg.payload.decode()}") |
| # Créer un client MQTT |
| client = mqtt.Client() |
| # Définir les callbacks |
| client.on_connect = on_connect |
| client.on_message = on_message |
| # Informations d'authentification |
| username = "votre_nom_utilisateur" |
| password = "votre_mot_de_passe" |
| # Connexion au broker avec authentification |
| client.username_pw_set(username, password) |
| client.connect("broker.hivemq.com", 1883, 60) # Remplacez par l'adresse de votre broker |
| # Boucle pour traiter les messages |
| client.loop_start() |
| # Publier un message sur un topic |
| client.publish("exemple/topic", "Bonjour, MQTT!") |
| # Garder le script en cours d'exécution |
| import time |
| time.sleep(10) |
| # Déconnexion |
| client.loop_stop() |
| client.disconnect() |

## Revendications

1. Procédé de gestion d'un dispositif distant (DD), mis en œuvre par un serveur de gestion (SG) configuré pour gérer ledit dispositif distant via un canal de gestion courante (C1) établi avec le dispositif distant, ledit procédé comprenant :
- une étape d'envoi (E401), au dispositif distant, via ledit canal de gestion, d'une commande d'établissement d'un canal d'intervention occasionnelle (C2) présentant une latence inférieure à celle du canal de gestion,
- suite à l'établissement dudit canal d'intervention occasionnelle, l'envoi (E405) d'au moins une commande de gestion au dispositif distant via ledit canal d'intervention occasionnelle.

2. Procédé de gestion selon la revendication 1 comprend en outre une étape de détection d'un événement donné déclenchant l'envoi, au dispositif distant, via ledit canal de gestion, de la commande d'établissement du canal d'intervention occasionnelle.

3. Procédé de gestion selon l'une quelconque des revendications précédentes comprenant en outre une étape d'envoi d'une commande de désactivation du canal d'intervention occasionnelle au dispositif distant.

4. Procédé de communication, mis en œuvre par un dispositif distant communiquant avec un serveur de gestion via un canal de gestion courante, ledit procédé comprenant :
- une étape de réception (E402), en provenance dudit serveur de gestion via ledit canal de gestion courante, d'une commande d'établissement d'un canal d'intervention occasionnelle présentant une latence inférieure à celle du canal de gestion,
- suite à l'établissement du canal d'intervention (E403), une étape de réception d'au moins une commande de gestion en provenance du serveur de gestion via le canal d'intervention.

5. Procédé de communication selon la revendication 4 dans lequel l'établissement du canal d'intervention occasionnelle est conditionné par une authentification de la commande d'établissement reçue (E401) en provenance du serveur de gestion.

6. Procédé de communication selon les revendications 4 ou 5 comprenant en outre une étape de désactivation du canal d'intervention occasionnelle après une période de temps connue du dispositif distant.

7. Procédé de communication selon les revendications 4 ou 5 comprenant en outre une étape de désactivation du canal d'intervention occasionnelle à l'issue d'une période d'inutilisation donnée dudit canal d'intervention occasionnelle.

8. Procédé de communication selon les revendications 4 ou 5 comprenant en outre une étape de désactivation du canal d'intervention occasionnelle sur réception d'une commande du serveur.

9. Procédé selon l'une quelconque des revendications précédentes dans lequel le canal d'intervention occasionnelle est conforme au protocole MQTT (Message Queuing Telemetry Transport).

10. Procédé selon l'une quelconque des revendications précédentes dans lequel le canal de gestion courante est conforme au protocole TR-069 (Technical Report).

11. Serveur de gestion (SG) configuré pour gérer un dispositif distant (DD) via un canal de gestion courante (C1) établi avec le dispositif distant, ledit serveur de gestion comprenant :
- un module d'envoi (MES) configuré pour envoyer au dispositif distant, via ledit canal de gestion, une commande d'établissement, d'un canal d'intervention occasionnelle (C2) présentant une latence inférieure à celle du canal de gestion,
- un module de gestion (MGS) configuré pour, suite à l'établissement dudit canal d'intervention occasionnelle, envoyer au moins une commande de gestion au dispositif distant via ledit canal d'intervention occasionnelle.

12. Dispositif distant (DD) apte à communiquer avec un serveur de gestion via un canal de gestion courante, ledit dispositif distant comprenant :
- un module de réception (MRD), configuré pour recevoir, en provenance dudit serveur de gestion via ledit canal de gestion courante, une commande d'établissement d'un canal d'intervention occasionnelle présentant une latence inférieure à celle du canal de gestion,
- un module de réception (MGD), configuré pour, suite à l'établissement du canal d'intervention occasionnelle, recevoir au moins une commande de gestion en provenance du serveur de gestion via le canal d'intervention.

13. Système de communication comprenant :
- un serveur de gestion selon la revendication 11,
- un dispositif distant selon la revendication 12.
